# EUROPEAN PATENT APPLICATION

(11) **EP 4 845 210 A1**
(43) Date of publication of application: **25.11.2026**
(21) Application number: 24925913.6
(22) Date of filing: 22.02.2024
(51) Int. Cl.: H04W 28/02, G06F 9/50, H04W 28/24

(54) **MEC DEVICE, INFORMATION PROCESSING METHOD, AND INFORMATION PROCESSING PROGRAM**

(71) Applicant: Softbank Corp., Tokyo 105-7529 (JP)
(72) Inventor: TAMURA, Shun, Tokyo 105-7529 (JP)
(74) Representative: SSM Sandmair
(86) International application number: PCT/JP2024/006668
(87) International publication number: WO 2025/177582

(57) **Abstract**

A MEC device according to the present application includes a management unit that manages a resource and a service by an application, a service providing unit that provides a service by the application to a user, and a change unit that causes the management unit to change, based on a change request for a service level of the service issued by the user, the service level for the user.

## Description

### Field

The present invention is related to an MEC device, an information processing method, and an information processing program.

### Background

In recent years, a Multi-access Edge Computing (MEC) device is attracting attention. The MEC device is arranged in, for example, a mobile communication network, and therefore, it is possible to reduce latency with a wireless terminal and reduce an application response time as compared to a device that is arranged in a cloud environment (for example, see Patent Literature 1) Citation List

### Patent Literature

Patent Literature 1: Japanese Laid-open Patent Publication No. 2022-135765

### Summary

### Technical Problem

A technology that allows to provide a service by an application in a certain mode that further meets needs of a user is needed.

An object of the present application is to provide a MEC device, an information processing method, and an information processing program that are able to provide a service by an application in a certain mode that further meets needs of a user.

### Solution to Problem

A MEC device according to the present application includes a management unit that manages a resource and a service by an application, a service providing unit that provides a service by the application to a user, and a change unit that causes the management unit to change, based on a change request for a service level of the service issued by the user.

Furthermore, the management unit sets, on the service providing unit, a new application that provides, to the user, the service at the service level that is indicated by the change request.

Furthermore, the management unit assigns a new application at the service level to a new resource based on a request that is issued by the change unit in accordance with the change request for the service level and sets the new application on the service providing unit.

Furthermore, the service providing unit receives, by an existing application that provides the service, operation for the change request for the service level that is performed by the user, and the change unit causes the management unit to change the service level for the user based on the operation for the change request for the service level that is performed by the user and that is received by the service providing unit.

Furthermore, the change unit causes the management unit to change the service level for the user based on operation for the change request for the service level that is performed by the user and that is received by an external server that provides the service.

Furthermore, the change unit acquires information on the user from a database that is arranged in a cloud and that manages the information on the user, and determines permission or rejection of a change of the service level based on the information on the user.

Furthermore, the management unit performs deployment of a network configuration including a network element that transfers data from the user to the application based on a request that is issued by the change unit in accordance with the change request for the service level.

Furthermore, the service level is a level of at least one of latency, a communication amount, and security.

Furthermore, the service includes a service by an application using AI.

An information processing method that is implemented by a MEC device, the information processing method including a management process of managing a resource and a service by an application, a service providing process of providing a service by the application to a user, and a change process of changing, at the management process, based on a change request for a service level of the service issued by the user, the service level for the user.

An information processing program that causes an MEC device to perform a process including a management process of managing a resource and a service by an application, a service providing process of providing a service by the application to a user, and a change process of changing, at the management process, based on a change request for a service level of the service issued by the user, the service level for the user.

### Advantageous Effects of Invention

According to one aspect of embodiments, it is possible to provide an application service in a certain mode that further meets needs of a user.

### Brief Description of Drawings

FIG. 1 is a diagram illustrating an example of a mobile communication network that includes a MEC device according to one embodiment.
FIG. 2 is a diagram illustrating a configuration example of the MEC device according to one embodiment.
FIG. 3 is a diagram illustrating an example of service level related information that is stored in a storage unit of the MEC device according to one embodiment.
FIG. 4 is a diagram illustrating an example of a process that is performed by a management unit in a processing unit of the MEC device according to one embodiment.
FIG. 5 is a diagram illustrating another example of the process that is performed by the management unit in the processing unit of the MEC device according to one embodiment.
FIG. 6 is a sequence diagram illustrating a flow of information processing according to one embodiment.
FIG. 7 is a hardware configuration diagram illustrating an example of a computer that implements functions of the MEC device.

### Description of Embodiments

Modes (hereinafter, referred to as "embodiments") for carrying out a MEC device, an information processing method, and an information processing program according to the present application will be described in detail below with reference to the drawings. Meanwhile, the MEC device, the information processing method, and the information processing program according to the present application are not limited by the embodiments below. Further, in each of the embodiments described below, the same components are denoted by the same reference symbols, and repeated explanation will be omitted.

### (Embodiment)

### [1. Introduction]

In recent years, services using Artificial Intelligence (AI), such as generative AI, have been proposed; however, AI services using AI are computationally heavy and cause large processing delays as compared to other services. Further, many services need a large amount of data to train AI and use data that is input by a user for training.

Therefore, it is desirable to enable detailed settings with respect to latency due to communication or processing and a security level at the time of use (for example, restriction of a communication path or presence or absence of training) in the AI services. The same may be applied to the other services, in addition to the AI services.

In Cloud Infrastructure as a Service (IaaS), in some cases, a user is allowed to select a service level in accordance with service quality or a service scale; however, Cloud IaaS is connected to a user terminal via the Internet, and therefore, it is difficult to control communication latency and restrict a communication path.

To cope with this, in one embodiment, a Multi-access Edge Computing (MEC) device is adopted as a device that provides a service using an application, such as Software as a Service (SaaS), so as to be able to control communication latency and restrict a communication path.

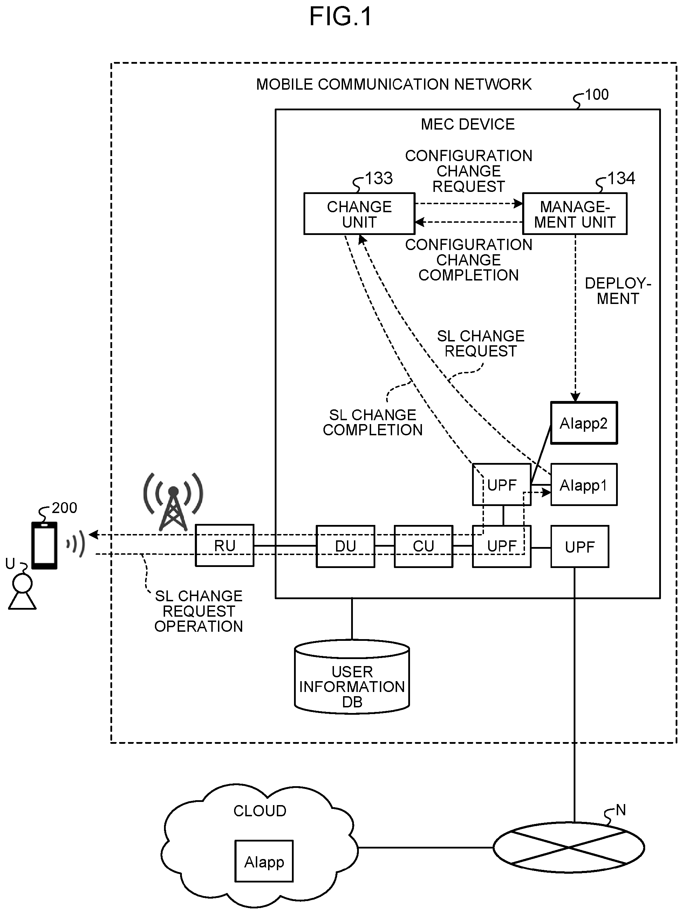

The MEC device according to one embodiment is arranged in, for example, a mobile communication network, such as 5th Generation Mobile Communication System (5G), and is able to communicate with a wireless terminal of a user. FIG. 1 is a diagram illustrating an example of a mobile communication network that includes a MEC device according to one embodiment. The mobile communication network according to one embodiment includes, for example, a RAN Intelligent Controller (RIC). The RIC performs, for example, control and optimization of a Radio Access Network (RAN) function.

A MEC device 100 illustrated in FIG. 1 is arranged in, for example, a base station in the mobile communication network or a place near the base station, but may be connected to a node in a core network of the mobile communication network or may be connected to a node in a route between the core network and the base station of the mobile communication network.

The MEC device 100 includes, as illustrated in FIG. 1, a change unit 133 that receives a change request for a service level of a service that is provided by an application, and a management unit 134 that manages a resource and a service of the application. With this configuration, the MEC device 100 is able to provide the service by the application in a certain mode that further meets needs of a user U.

The service level is, for example, a level of at least one of latency, a communication amount, and security. The service level related to the latency increases with decrease in the latency. The service level related to the communication amount increases with increase in a maximum communication amount per unit time.

The service level related to the security increases with increase in security. The security is specified by, for example, a tenant level, presence or absence of training, restriction of a communication path, or the like. The tenant level includes, for example, a multi-tenant and a single tenant. In the multi-tenant, the plurality of users U share a single instance or a single resource, and, in the single tenant, a dedicated instance or a dedicated resource is provided per user.

The restriction of the communication path is implemented by, for example, network slicing that sets an instance, such as a Distributed Unit (DU), a Central Unit (CU), or a User Plane Function (UPF), per user or per users below a predetermined number.

The management unit 134 is, for example, Service Management and Orchestration (SMO) or Orchestrator, but not limited to this example. The change unit 133 is, for example, an Application Programming Interface (API) that receives a change request for a service level, and, in the following, may be described as a service level change API. Further, in the following, the change request for the service level may be described as an SL change request and the service level change API may be described as an SL change API.

In the MEC device 100, an AI application AIapp1 that is an application for providing an AI service is arranged. The user U of a wireless terminal 200 is able to use the service that is provided by the AI application AIapp1 by accessing the AI application AIapp1 arranged in the MEC device 100 by using the wireless terminal 200.

The wireless terminal 200 accesses the MEC device 100 via, for example, a Radio Unit (RU), a DU, a CU, a UPF, and a UPF. The RU has a function to transmit and receive radio waves to and from the wireless terminal 200 and performs conversion between analog signals and digital signals.

The AI application AIapp1 is able to receive SL change request operation that is operation for the change request for the service level by the user U, and outputs an SL change request to the change unit 133 when receiving the SL change request operation.

The SL change request includes, for example, a user Identifier (ID) that is identification information on the user U, an application ID that is identification information on an application for which the service level is to be changed, service level information on the service level for which a change is requested by the user U.

The change unit 133, when receiving the SL change request, outputs a configuration change request corresponding to the SL change request to the management unit 134. The management unit 134, when acquiring the configuration change request that is output from the change unit 133, creates a new resource based on the acquired configuration change request.

Further, the management unit 134 deploys a new AI application AIapp2 with respect to the created new resource and assigns the new AI application AIapp2 to the new resource. The new AI application AIapp2 is an AI application at the service level corresponding to the SL change request and is an AI application of the same type as the AI application AIapp1.

Furthermore, the management unit 134 assigns the new AI application AIapp2 to the user U. With this configuration, the new AI application AIapp2 at the service level corresponding to the SL change request is assigned to the user U.

The change unit 133, when the process corresponding to the SL change request is terminated, notifies the change unit 133 of configuration change completion. When receiving a notice of the configuration change completion from the change unit 133, the change unit 133 notifies the wireless terminal 200 of SL change completion. With this configuration, the user U is able to use a service that is provided by the AI application AIapp2 at the service level corresponding to the SL change request.

In this manner, when receiving the change request for the service level for a service that is provided by an application, the MEC device 100 according to one embodiment changes the service level in accordance with the change request. With this configuration, the MEC device 100 is able to provide the service by the application in a certain mode that further meets needs of the user U. In the following, a specific configuration and specific processes of the MEC device 100 according to one embodiment will be described in detail.

### [2. Configuration of MEC device 100]

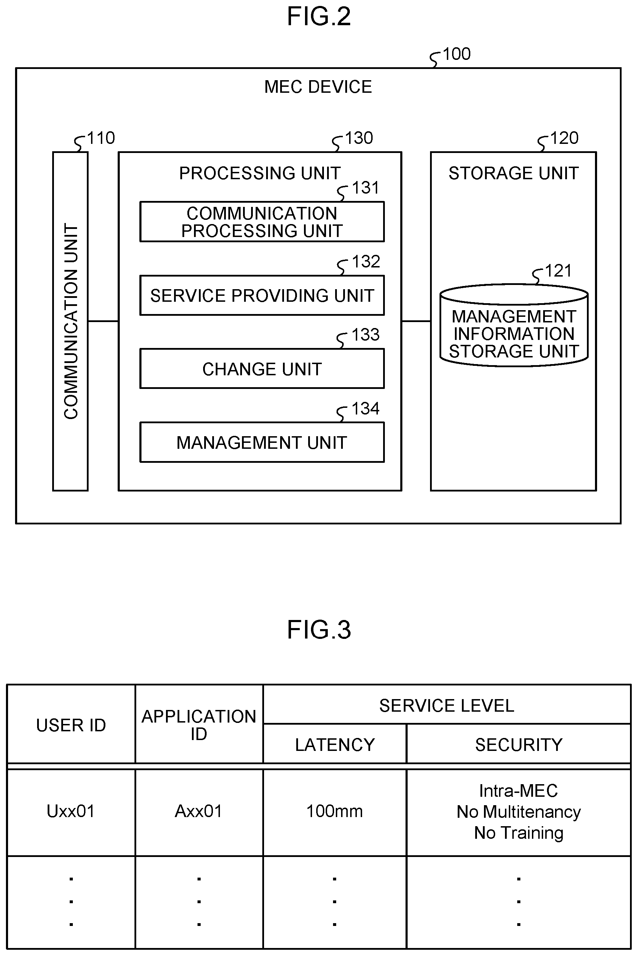

FIG. 2 is a diagram illustrating a configuration example of the MEC device 100 according to one embodiment. The MEC device 100 includes a communication unit 110, a storage unit 120, and a processing unit 130.

### [2.1. Communication unit 110]

The communication unit 110 includes, for example, various kinds of interfaces, such as an interface for exchanging signals with a RU and an interface for transmitting and receiving data to and from a network in the mobile communication network.

The communication unit 110 transmits and receives a signal to and from the wireless terminal 200 via the RU. Further, the communication unit 110 acquires user information that is information on the user U of the mobile communication network from a user information database (DB) (see FIG. 1) that is held for each of the users U.

Further, the communication unit 110 transmits and receives data to and from an apparatus that is arranged in a cloud or the like or an application (for example, an AI application AIApp as illustrated in FIG. 1) via a network N (see FIG. 1). The network N is, for example, the Internet, but not limited to this example. The network N is connected to, for example, a network that is arranged in the mobile communication network via a gateway or the like.

### [2.2. Storage unit 120]

The storage unit 120 is implemented by, for example, a semiconductor memory device, such as a Random Access Memory (RAM) or a Flash Memory, or a storage device, such as a hard disk or an optical disk.

The storage unit 120 includes a management information storage unit 121 for storing management information that is information managed by the processing unit 130. The management information includes, for example, information indicating various kinds of instances deployed to the MEC device 100, corresponding resources, corresponding connection relationships, and the like. The instance is, for example, a network element, an application, or the like, but not limited to this example.

Furthermore, the storage unit 120 stores therein service level related information that is information related to a service level that is set in accordance with the SL change request operation performed by the user U. FIG. 3 is a diagram illustrating an example of the service level related information that is stored in the storage unit 120 of the MEC device 100 according to one embodiment.

As illustrated in FIG. 3, the service level related information that is stored in the management information storage unit 121 includes items such as a "user ID", an "application ID", and a "service level". The "user ID" is identification information on the user U and assigned for each of the users U. The "application ID" is identification information for each of types of applications and assigned for each of the types of applications.

The "service level" is information on a service level of a service of the application corresponding to the "application ID" and includes information on a service level that corresponds to the User U corresponding to the "user ID". The information on the service level includes information that indicates a service level related to latency due to processing, communication, or the like and information that indicates a service level related to security. The information that indicates the service level related to the latency is specified by, for example, a maximum delay value.

The service level related to the security includes a service level related to a tenant level, a service level related to presence or absence of training, a service level related to restriction of a communication path, or the like. Types of the service level related to the tenant level include, for example, a multi-tenant and a single tenant; however, the multi-tenant may be further classified by the number of tenants.

The service level related to presence or absence of training indicates whether or not data that is input by the user U is used for training of AI that is used by the AI application. Types of information that indicates use or non-use for training of AI includes information that indicates presence of training and information that indicates absence of training. The service level related to the restriction of the communication path indicates a degree of exclusivity of a network element and is indicated by, for example, a type, the number of users, or the like of the network element that is dedicated to the user U among the DU, the CU, and the UPF. Meanwhile, although not illustrated in the drawings, the information on the service level includes a service level related to a communication amount.

### [2.3. Processing unit 130]

The processing unit 130 is a controller and implemented by causing, for example, a processor, such as a Central Processing Unit (CPU), a Micro Processing Unit (MPU), or a General Purpose Graphic Processing Unit (GPGPU), to execute various kinds of programs (corresponding to one example of the information processing program) that are stored in an internal storage device of the MEC device 100 while using a RAM or the like as a work area.

Furthermore, the processing unit 130 is a controller and may be implemented by, for example, an integrated circuit, such as an Application Specific Integrated Circuit (ASIC) or a Field Programmable Gate Array (FPGA).

As illustrated in FIG. 2, the processing unit 130 includes a communication processing unit 131, a service providing unit 132, the change unit 133, and the management unit 134 and implements or executes functions and operation of information processing as described below. Meanwhile, an internal configuration of the processing unit 130 is not limited to the configuration as illustrated in FIG. 3 and may be a different configuration as long as the information processing to be described below is performed.

### [2.3.1. Communication processing unit 131]

The communication processing unit 131 includes various kinds of network elements for transmitting and receiving data to and from the user U. The network elements are, for example, a DU, a CU, a UPF, and the like and are instances that are deployed by the management unit 134, and, network configurations including connection relationships among the network elements and resources of the network elements are managed.

The DU is a network element for performing a process on a physical layer; for example, the DU performs signal modulation, signal demodulation, wireless resource allocation, Radio Link Control (RLC), such as retransmission control, or the like. The CU performs a process for Packet Data Convergence Protocol (PDCP) including packet encryption, Radio Resource Control (RRC) including wireless resource management, and the like. The UPF performs transfer and process of user data.

The network element in the communication processing unit 131 is a network element that is deployed to an existing resource or a new resource and managed by the management unit 134.

### [2.3.2. Service providing unit 132]

The service providing unit 132 provides a service by an application to the user U.

The application in the service providing unit 132 is an application that is deployed to an existing resource or a new resource and managed by the management unit 134. The application in the service providing unit 132 is, for example, an AI application that is an application for providing an AI service, an Internet of Things (IoT) application for processing data from IoT in real time, or a game application that is an application for a game using augmented reality (AR), but not limited to this example.

The AI application is, for example, a chatbot application using Large Language Models (LLM), an image recognition application for performing image recognition using image recognition AI, or an autonomous driving application for controlling a vehicle by using autonomous driving AI or an algorithm based on data that is acquired from various kinds of sensors arranged in the vehicle, but not limited to this example.

The application in the service providing unit 132 receives the SL change request operation that is operation for the change request for the service level by the user U. The application is one example of an existing application.

For example, the application in the service providing unit 132 provides a GUI for changing the service level to the user U and receives the SL change request operation that is performed by the user on the GUI. The application, when receiving the SL change request operation, outputs an SL change request corresponding to the SL change request operation to the management unit 134.

The SL change request includes, for example, a user ID that is identification information on the user U, an application ID that is identification information on an application to which the SL change request is directed, service level information on the service level for which a change is requested by the user U, or the like.

### [2.3.3. Change unit 133]

The change unit 133 causes the management unit 134 to change the service level for the user U based on the SL change request that is a change request for a service level of a service and that is issued by the user U.

For example, the change unit 133 receives the SL change request corresponding to the SL change request operation that is received by the service providing unit 132 and outputs a configuration change request corresponding to the received SL change request to the management unit 134, to thereby cause the management unit 134 to change the service level in accordance with the SL change request operation.

For example, when the AI application AIapp1 (see FIG. 1) receives SL change operation, the change unit 133 receives a SL change request that is output from the AI application AIapp1 and outputs a configuration change request corresponding to the received SL change request to the management unit 134. The configuration change request includes, for example, information, such as the user ID, the application ID, or the service level, but is not limited to this example.

Furthermore, the change unit 133 may receive an SL change request corresponding to an SL change request operation that is received by an external server that provides a service and output a configuration change request corresponding to the SL change request to the management unit 134, to thereby cause the management unit 134 to change a service level corresponding to the SL change request operation.

For example, when the AI application AIapp (see FIG. 1) that is arranged in a cloud receives SL change operation, the change unit 133 outputs a configuration change request corresponding to an SL change request that is output from the AI application AIapp to the management unit 134.

Furthermore, the change unit 133 is able to determine permission or rejection of a change of the service level in accordance with the SL change request operation. For example, the change unit 133 acquires user information from the user information DB (see FIG. 1) that is a database in which the user information that is information on the user U is managed, and determines permission or rejection of a change of the service level based on the acquired user information.

The user information includes, for example, information that indicates a service class of the user U, information that indicates a charging model of the user, or the like for each of types of applications or for each combination of a plurality of types of applications. Types of the service class include service classes of a plurality of levels, such as a basic class, an intermediate class, and an advanced class. A service that is available to the user U in services provided by the application is different for each service class.

Furthermore, types of the charging model include, for example, a plurality of charging models, such as no charge, relatively low charge, and relatively high charge, but are not limited to this example. Meanwhile, the service class is set based on the charging model, but the service class may be set based on, for example, a usage history of the user U.

The change unit 133 permits a change of the service level when information that is included in the user information on the user U who has performed the SL change request operation meets a predetermined condition that is determined in advance, and rejects the change of the service level in other cases.

For example, the change unit 133 permits the change of the service level when the service class of the user U who has performed the SL change request operation is other than the basic class or when the charging model of the user U who has performed the SL change request operation indicates charge.

Furthermore, the change unit 133 rejects the change of the service level when the service class of the user U who has performed the SL change request operation is the basic class or when the charging model of the user U who has performed the SL change request operation indicates no charge.

Moreover, the change unit 133 may be able to determine permission or rejection of a change of the service level for each type of service level based on the user information. Types of the service level include, for example, latency, a communication amount, a tenant level, presence or absence of training, restriction of a communication path, and the like. The tenant level, presence or absence of training, and the restriction of the communication path are types of security.

For example, the change unit 133 determines permission or rejection of a change of the service level for each type of the service level based on the level of the service class of the user U who has performed the SL change request operation or the charging model of the user U who has performed the SL change request operation.

### [2.3.4. Management unit 134]

The management unit 134 performs management of various kinds of network elements and applications, various kinds of deployment, optimization of communication, and the like. The management unit 134 is, for example, SMO or orchestrator, but not limited to this example.

The resource is, for example, a processor, a memory, a network resource, or the like. The deployment includes, for example, deployment of a network element, deployment of an application, or the like.

Management of the network function includes management of a resource of a network element or a service. The network element includes, for example, a DU, a CU, a UPF, and the like, and the management unit 134 manages instances or the like of the network elements.

Management of an application that is managed by the management unit 134 includes management of a resource and a service of the application. Management of the service includes management of the service level for each of the users U.

The management unit 134 changes the service level of the application that is provided to the user U to a service level corresponding to the configuration change request based on, for example, the configuration change request that is output from the change unit 133. The service level is a level of at least one of latency, a communication amount, and security.

For example, the management unit 134 sets, on the service providing unit 132, a new application that provides, to the user U, a service at the service level that is indicated by the configuration change request that is output from the change unit 133.

For example, the management unit 134 assigns a new application to a new resource and sets the new application on the service providing unit 132 based on the configuration change request that is output from the change unit 133. In this manner, the management unit 134 sets the new resource and deploys the new application to the set new resource to thereby set the new application on the service providing unit 132. In this case, the new application is a single-tenant application.

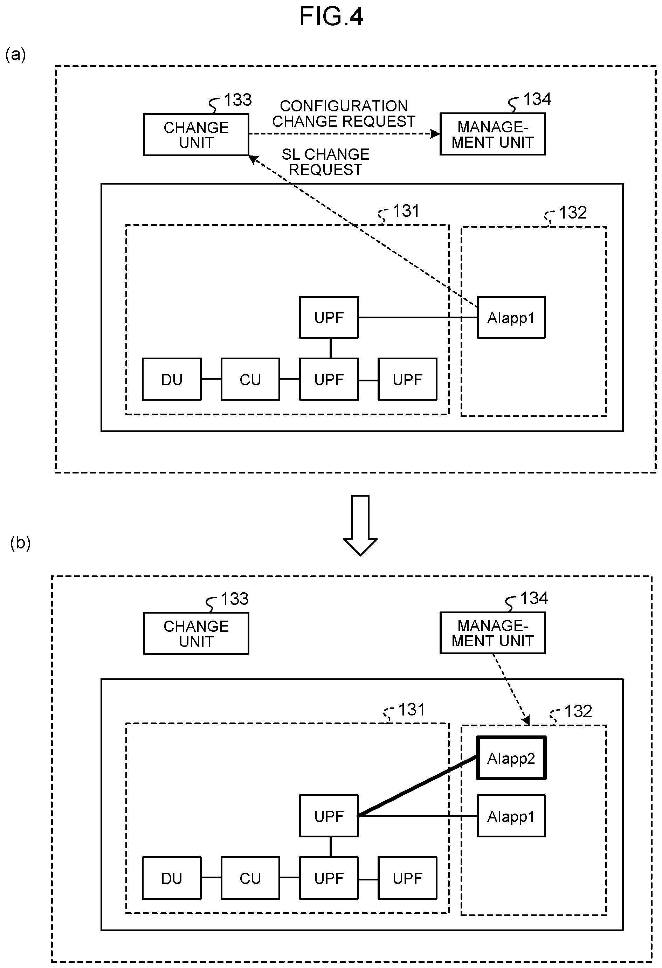

FIG. 4 is a diagram illustrating an example of a process that is performed by the management unit 134 in the processing unit 130 of the MEC device 100 according to one embodiment. As illustrated in FIG. 4(a), when the change unit 133 receives an SL change request that is output from the AI application AIapp1, the change unit 133 outputs a configuration change request corresponding to the SL change request to the management unit 134.

The management unit 134, as illustrated in FIG. 4(b), creates a new resource based on the configuration change request that is output from the change unit 133, and assigns the new AI application AIapp2 corresponding to the configuration change request to the new resource.

Further, the management unit 134 is able to perform setting on the service providing unit 132 by deploying the new application to an existing resource. In this case, the existing resource is a multi-tenant resource.

Furthermore, the management unit 134 is able to deploy a network configuration that includes a network element for transferring data from the user U to the application based on the configuration change request corresponding to the SL change request. Moreover, the management unit 134 assigns the network configuration that is newly deployed to the new application.

With this configuration, the management unit 134 is able to restrict the communication path and improve a security level for the service provided by the application.

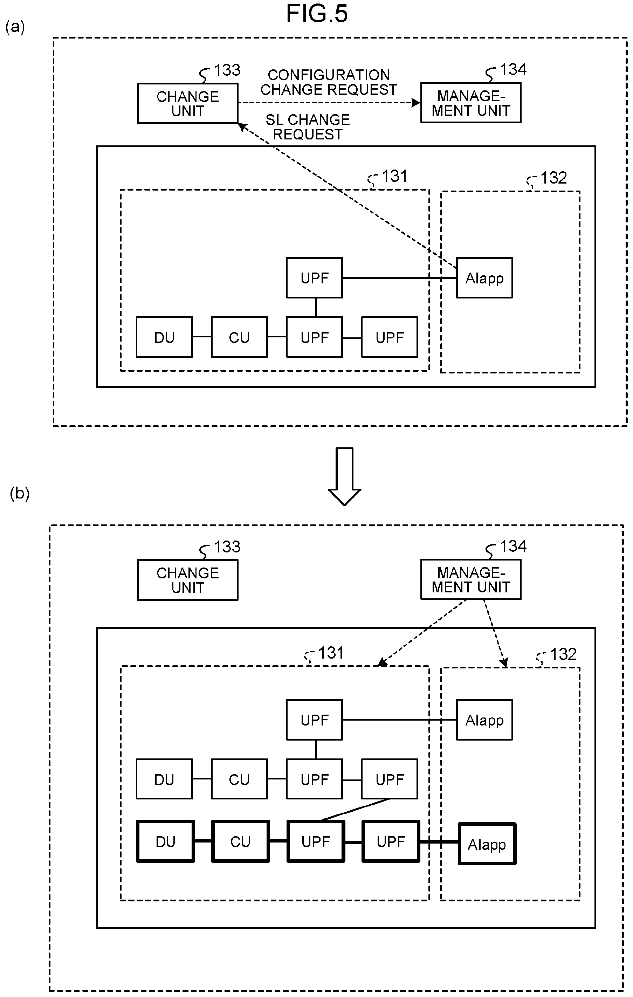

FIG. 5 is a diagram illustrating another example of the process that is performed by the management unit 134 in the processing unit 130 of the MEC device 100 according to one embodiment. As illustrated in FIG. 5(a), when the change unit 133 receives an SL change request that is output from the AI application AIapp1, the change unit 133 outputs a configuration change request corresponding to the SL change request to the management unit 134.

The management unit 134, as illustrated in FIG. 4(b), creates a new resource based on the configuration change request that is output from the change unit 133, and assigns a new network element and the new AI application AIapp2 corresponding to the SL change request to the new resource.

In the example illustrated in FIG. 4(b), the management unit 134 assigns, as new network elements, a DU, a CU, a UPF, and a UPF to a new resource. With this configuration, a communication path dedicated to the user U is arranged and the communication path for the user U is restricted, so that it is possible to improve a security level.

### [3. Flow of information processing]

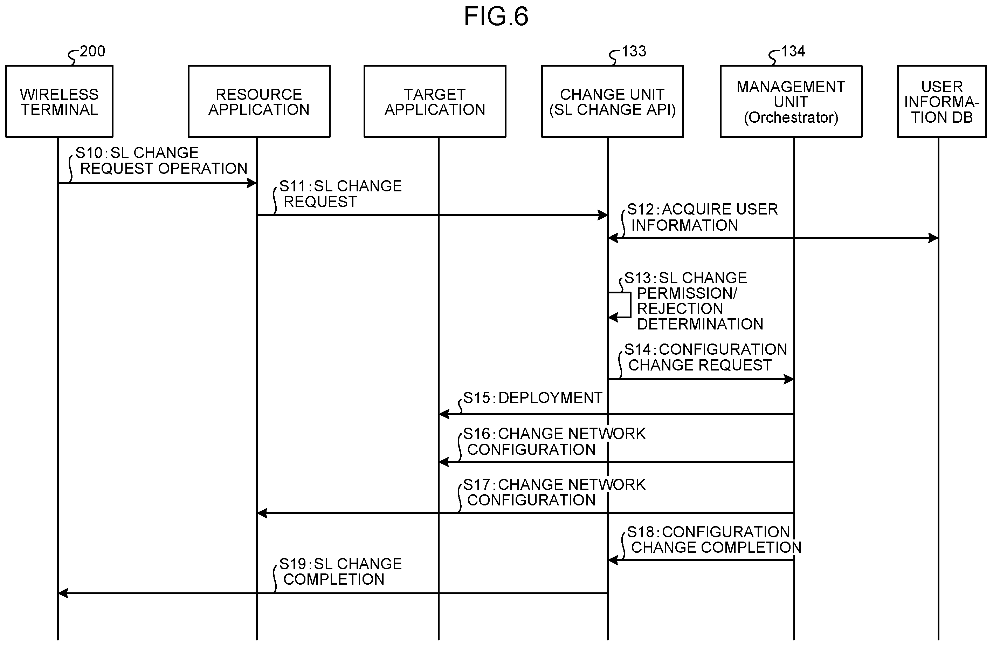

FIG. 6 is a sequence diagram illustrating a flow of information processing according to one embodiment. As illustrated in FIG. 6, the user U operates the wireless terminal 200 and performs the SL change request operation on a resource application (Step S10). The resource application is, for example, the AI application AIapp1 illustrated in FIG. 1 or the like or the AI application AIapp illustrated in FIG. 1.

The resource application, when receiving the SL change request operation, outputs the SL change request corresponding to the SL change request operation to the change unit 133 (Step S11). The change unit 133, when receiving the SL change request, acquires user information on the user U who has performed the SL change request operation from the user information DB (see FIG. 1) (Step S12), and performs SL change permission/rejection determination for determining permission or rejection of a change of the service level based on the acquired user information (Step S13).

The change unit 133, when determining that a change of the service level is permitted based on the user information, outputs the configuration change request corresponding to the SL change request to the management unit 134 (Step S14).

The management unit 134 changes configurations of the communication processing unit 131 and the service providing unit 132 based on the configuration change request so as to be able to provide a service by an application at a service level corresponding to the SL change request operation to the user U corresponding to the SL change request operation (Step S15 to Step S17).

Specifically, the management unit 134, at Step S15, for example, creates a new resource and assigns deployment of a new application to the new resource.

Furthermore, the management unit 134, at Step S16, changes a network configuration of a target application and assigns the target application to the user U corresponding to the SL change request operation. Moreover, at Step S17, a network configuration of the resource application is changed and assignment to the resource application of the user U corresponding to the SL change request operation is released.

The management unit 134, when completing processes from Step S15 to Step S17, notifies the change unit 133 of configuration change completion. The change unit 133, when being notified of the configuration change completion by the management unit 134, notifies the wireless terminal 200 of SL change completion. With this configuration, the user U is able to use a service that is provided by the target application at the service level corresponding to the SL change request.

### [4. Effects]

As described above, the MEC device 100 according to one embodiment includes the management unit 134 and the change unit 133. The management unit 134 manages a resource and a service by an application. The change unit 133 includes a service providing unit that provides a service by the application to a user, and causes the management unit 134 to change, based on a change request for a service level of a service issued by the user, the service level for the user. With this configuration, the MEC device 100 is able to provide the service by the application in a certain mode that further meets needs of the user.

Furthermore, the management unit 134 sets, on the service providing unit, a new application that provides, to the user, the service at the service level that is indicated by the change request. With this configuration, the MEC device 100 is able to provide the service by the application in a certain mode that further meets needs of the user.

Moreover, the management unit 134 assigns a new application at the service level to a new resource based on a request that is issued by the change unit 133 in accordance with the change request for the service level and sets the new application on the service providing unit. With this configuration, the MEC device 100 is able to provide the service by the application in a certain mode that further meets needs of the user.

Furthermore, the service providing unit 132 receives, by an existing application that provides the service, operation for the change request for the service level that is performed by the user, and the change unit 133 causes the management unit 134 to change the service level for the user based on the operation for the change request that is performed by the user and that is received by the service providing unit. With this configuration, the MEC device 100 is able to provide the service by the application in a certain mode that further meets needs of the user.

Moreover, the change unit 133 causes the management unit 134 to change the service level for the user based on operation for the change request that is performed by the user and that is received by an external server that provides the service. With this configuration, the MEC device 100 is able to provide the service by the application in a certain mode that further meets needs of the use.

Furthermore, the change unit 133 acquires information on the user from a database that is arranged in a cloud and that manages the information on the user, and determines permission or rejection of a change of the service level based on the information on the user. With this configuration, the MEC device 100 is able to provide the service by the application in a certain mode that further meets needs of the use.

Moreover, the management unit 134 performs deployment of a network configuration including a network element that transfers data from the user to the application based on a request that is issued by the change unit in accordance with the change request for the service level. With this configuration, the MEC device 100 is able to provide the service by the application in a certain mode that further meets needs of the use.

Furthermore, the service level is a level of at least one of latency, a communication amount, and security. With this configuration, the MEC device 100 is able to provide the service by the application in a certain mode that further meets needs of the use.

Moreover, the service includes a service by an application using AI. With this configuration, the MEC device 100 is able to provide the service by the application in a certain mode that further meets needs of the use.

### [5. Hardware configuration]

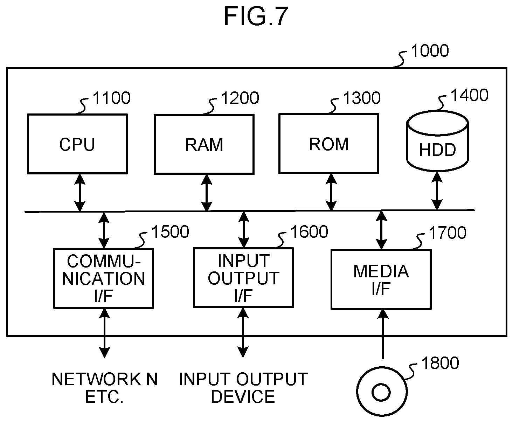

The MEC device 100 according to one embodiment as described above may be implemented by, for example, a computer 1000 that is configured as illustrated in FIG. 7. FIG. 7 is a hardware configuration diagram illustrating an example of a computer that implements the functions of the MEC device 100. The computer 1000 includes a CPU 1100, a RAM 1200, a ROM 1300, an HDD 1400, a communication interface (I/F) 1500, an input output interface (I/F) 1600, and a media interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer 1000, a program that is dependent on hardware of the computer 1000, and the like.

The HDD 1400 stores therein a program that is executed by the CPU 1100, data that is used by the program, and the like. The communication interface 1500 receives data from a different apparatus via a predetermined communication network, sends the data to the CPU 1100, and transmits data that is generated by the CPU 1100 to a different apparatus via a predetermined communication network.

The CPU 1100 controls an output device, such as a display or a printer, and an input device, such as a keyboard or a mouse, via the input output interface 1600. The CPU 1100 acquires data from the input device via the input output interface 1600. Further, the CPU 1100 outputs generated data to the output device via the input output interface 1600.

The media interface 1700 reads a program or data that is stored in a recording medium 1800 and provides the program or the data to the CPU 1100 via the RAM 1200. The CPU 1100 loads the program from the recording medium 1800 onto the RAM 1200 via the media interface 1700 and executes the loaded program. The recording medium 1800 is, for example, an optical recording medium, such as a Digital Versatile Disc (DVD) or a Phase change rewritable Disk (PD), a magneto-optical recording medium, such as a Magneto-Optical disk (MO), a tape medium, a magnetic recording medium, a semiconductor memory, or the like.

For example, when the computer 1000 functions as the MEC device 100 according to one embodiment, the CPU 1100 of the computer 1000 executes a program that is loaded onto the RAM 1200 and implements the functions of the processing unit 130. The CPU 1100 of the computer 1000 reads the program from the recording medium 1800 and executes the program; however, as another example, it may be possible to acquire the program from a different apparatus via a predetermined communication network.

Thus, some embodiments of the present application have been described in detail above based on the drawings, but they are illustrated by examples, and the present invention may be implemented as other embodiments with various modifications and improvements based on knowledge of a person skilled in the art, including aspects described in the section of the disclosure of the present invention.

### [6. Others]

Of the processes described in the embodiments and the modifications, all or part of a process described as being performed automatically may also be performed manually. Alternatively, all or part of a process described as being performed manually may also be performed automatically by known methods. In addition, the processing procedures, specific names, and information including various kinds of data and parameters illustrated in the above-described document and drawings may be arbitrarily changed unless otherwise specified. For example, various kinds of information illustrated in each of the drawings are not limited to the information illustrated in the drawings.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions.

Moreover, the embodiments and the modifications as described above may be appropriately combined as long as processing contents do not conflict with each other.

Furthermore, the unit (section, module, or unit)" described above may be replaced with a "means", a "circuitry", or the like. For example, the acquisition unit may be replaced with an acquisition means or an acquisition circuitry.

### Reference Signs List

- 100: MEC device
- 110: communication unit
- 120: storage unit
- 130: processing unit
- 121: management information storage unit
- 131: communication processing unit
- 132: service providing unit
- 133: change unit
- 134: management unit
- 200: wireless terminal
- N: network

## Claims

1. A MEC device comprising:
a management unit that manages a resource and a service by an application;
a service providing unit that provides a service by the application to a user; and
a change unit that causes the management unit to change, based on a change request for a service level of the service issued by the user, the service level for the user.

2. The MEC device according to claim 1, wherein the management unit sets, on the service providing unit, a new application that provides, to the user, the service at the service level that is indicated by the change request.

3. The MEC device according to claim 2, wherein the management unit assigns a new application at the service level to a new resource based on a request that is issued by the change unit in accordance with the change request for the service level and sets the new application on the service providing unit.

4. The MEC device according to any one of claims 1 to 3, wherein
the service providing unit receives, by an existing application that provides the service, operation for the change request for the service level that is performed by the user, and
the change unit causes the management unit to change the service level for the user based on the operation for the change request for the service level that is performed by the user and that is received by the service providing unit.

5. The MEC device according to any one of claims 1 to 3, wherein the change unit causes the management unit to change the service level for the user based on operation for the change request for the service level that is performed by the user and that is received by an external server that provides the service.

6. The MEC device according to any one of claims 1 to 3, wherein the change unit acquires information on the user from a database that is arranged in a cloud and that manages the information on the user, and determines permission or rejection of a change of the service level based on the information on the user.

7. The MEC device according to any one of claims 1 to 3, wherein the management unit performs deployment of a network configuration including a network element that transfers data from the user to the application based on a request that is issued by the change unit in accordance with the change request for the service level.

8. The MEC device according to any one of claims 1 to 3, wherein the service level is a level of at least one of latency, a communication amount, and security.

9. The MEC device according to claim 1 or 2, wherein the service includes a service by an application using AI.

10. An information processing method that is implemented by a MEC device, the information processing method comprising:
a management process of managing a resource and a service by an application;
a service providing process of providing a service by the application to a user; and
a change process of changing, at the management process, based on a change request for a service level of the service issued by the user, the service level for the user.

11. An information processing program that causes an MEC device to perform a process comprising:
a management process of managing a resource and a service by an application;
a service providing process of providing a service by the application to a user; and
a change process of changing, at the management process, based on a change request for a service level of the service issued by the user, the service level for the user.
